# EUROPÄISCHE PATENTANMELDUNG

(11) **EP 1 176 445 A2**
(43) Veröffentlichungstag der Anmeldung: **30.01.2002**
(21) Anmeldenummer: 01117727.6
(22) Anmeldetag: 27.07.2001
(51) Int. Cl.: G02B 6/42, G02B 6/38

(54) **Optischer Transceiver**

(30) Priorität: 28.07.2000 DE 20013088 U
(71) Anmelder: Harting Elektro-optische Bauteile GmbH & Co. KG., 32339 Espelkamp (DE)
(72) Erfinder: Loddoch, Dr. Michael, 31141 Hildesheim (DE); Kragl. Dr. Hans, 31199 Diekholzen (DE)
(74) Vertreter: Sties, Jochen, Dipl.-Ing.

(57) **Zusammenfassung**

Die Erfindung betrifft einen optischen Transceiver mit einem Gehäuse (10, 12), einer in Abformtechnik hergestellten Leiterplatte (16), mindestens einer Lichtleitfaser (24), die mit der Leiterplatte gekoppelt ist, und mehreren elektrisch leitenden Kontaktelementen (26), die mit Leiterbahnen (18) der Leiterplatte elektrisch leitend verbunden sind.

## Beschreibung

Die Erfindung betrifft einen optischen Transceiver, der dazu vorgesehen ist, optische Signale in elektrische Signale umzuwandeln, und umgekehrt. Die optischen Signale werden dabei über mindestens eine Lichtleitfaser bereitgestellt.

Die Aufgabe der Erfindung besteht darin, einen solchen Transceiver dahingehend weiterzubilden, daß er von einem Benutzer in einfacher Weise angewendet werden kann, ohne daß sich dieser mit der speziellen Installationstechnik für Lichtwellenleiter vertraut machen muß.

Zu diesem Zweck ist erfindungsgemäß vorgesehen, daß der optische Transceiver ein Gehäuse enthält, eine in Abformtechnik hergestellte Leiterplatte, mindestens eine Lichtleitfaser, die mit der Leiterplatte gekoppelt ist, und mehrere elektrisch leitende Kontaktelemente, die mit Leiterbahnen der Leiterplatte elektrisch leitend verbunden sind. Durch die Verwendung einer in Abformtechnik hergestellten Leiterplatte ist ein sehr kompakter Aufbau des Transceivers möglich, da in die abgeformte Leiterplatte sowohl optische Leiterbahnen in der Form von Wellenleitergraben als auch elektrische Leiterbahnen in der Form von partiellen Metallisierungen integriert werden können. Der Aufbau einer solchen Leiterplatte ist beispielsweise aus der DE 198 51 265 A1 oder der DE 198 61 162 A1 bekannt, und für die Einzelheiten der Herstellung einer solchen Leiterplatte wird auf diese Druckschriften verwiesen. Aufgrund der kompakten Leiterplatte kann das Gehäuse mit sehr kleinen Abmessungen ausgeführt werden, beispielsweise als Steckergehäuse für einen Stecker des Typs RJ-45. Die Kontaktelemente, die beispielsweise Steckkontakte sein können, entsprechen den üblichen Kontakten eines solchen Steckers. Der Benutzer steckt den Transceiver wie einen herkömmlichen Stecker in eine zugehörige Buchse ein, wobei er mit den optischen Komponenten nicht in Berührung kommt und den Einsatz einer optischen Übertragungsstrecke nicht bemerkt, da die Schnittstelle nach wie vor ein elektrischer Steckverbinder ist.

Vorteilhafte Ausgestaltungen der Erfindung ergeben sich aus den Unteransprüchen.

Die Erfindung wird nachfolgend anhand einer bevorzugten Ausführungsform beschrieben, die in den beigerügten Zeichnungen dargestellt ist. In diesen zeigen:

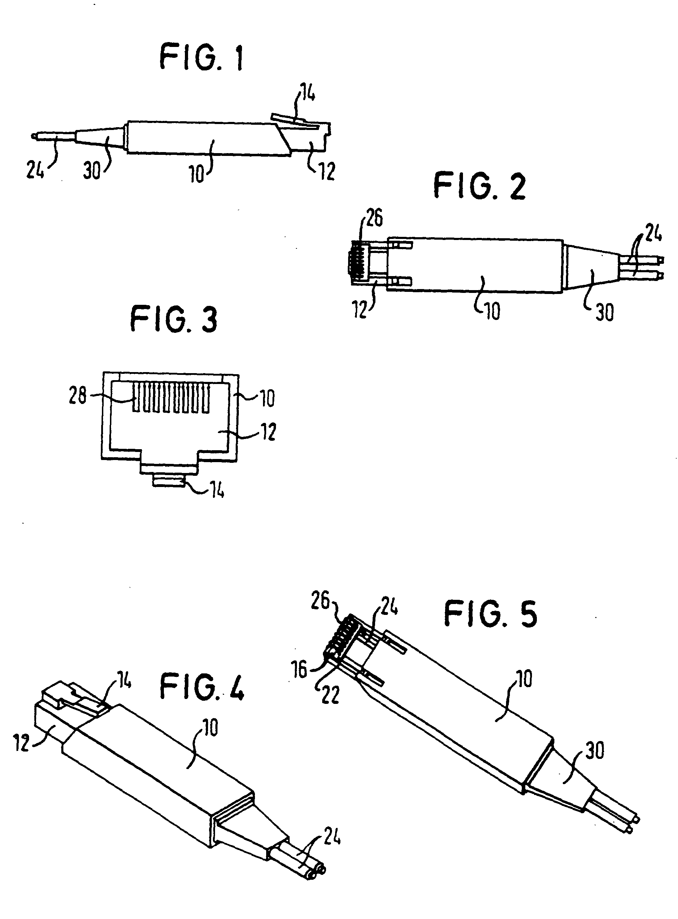

- Figur 1 einen optischen Transceiver in einer Seitenansicht;
- Figur 2 den Transceiver von Figur 1 in einer Draufsicht;
- Figur 3 den Transceiver von Figur 1 in einer Vorderansicht;
- Figur 4 den Transceiver von Figur 1 in einer perspektivischen Unteransicht;
- Figur 5 den Transceiver von Figur 1 in einer perspektivischen Draufsicht; und
- Figur 6 in einer perspektivischen Ansicht die bei dem Transceiver von Figur 1 verwendete Leiterplatte mit einem Steckkontakt.

Der in den Zeichnungen dargestellte, erfindungsgemäße Transceiver ist als Steckverbinder des Typs RJ-45 ausgeführt. Es wird allerdings darauf hingewiesen, daß er auch als Steckverbinder eines anderen Typs ausgeführt werden kann.

Der Steckverbinder weist ein Gehäuse auf, das aus einem Außenteil 10, das als Griffstück dienen kann, und einem Innenteil 12 besteht. Das Innenteil ist mit einem Schnapphaken 14 versehen, mittels dem der Steckverbinder in einer Steckbuchse verriegelt werden kann.

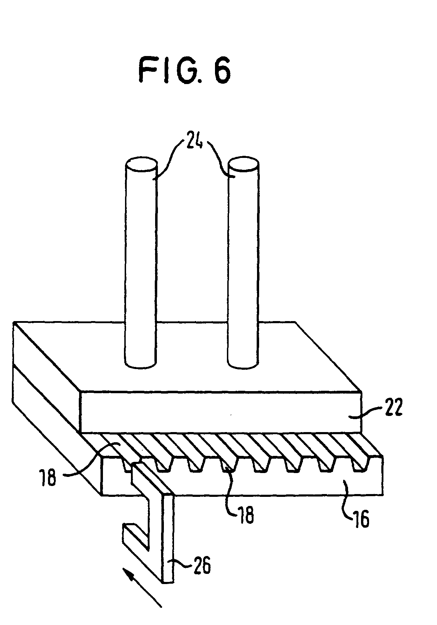

Am Innenteil 12 des Gehäuses ist eine Leiterplatte 16 angeordnet, die in vergrößertem Maßstab in Figur 6 gezeigt ist. Die Leiterplatte 16 ist in Abformtechnik hergestellt, wie dies in den beiden oben genannten Offenlegungsschriften beschrieben ist, und weist elektrische Leiterbahnen 18 auf, die durch partiell metallisierte Bereiche der Leiterplatte gebildet sind. Die Leiterplatte weist weiterhin optische Leiterbahnen auf, die in den Figuren nicht sichtbar sind. Diese optischen Leiterbahnen sich als mit einem geeigneten Material gefüllte Wellenleitergräben ausgebildet. Die Leiterplatte 16 ist weiterhin mit in Figur 6 nicht sichtbaren opto-elektronischen Bauteilen versehen, die präzise ausgerichtet an der Leiterplatte befestigt sind und in geeigneter Weise mit den optischen bzw. elektrischen Leiterbahnen verbunden sind.

Auf die Leiterplatte 16 ist eine Deckplatte 22 aufgesetzt, die mit zwei Aufnahmebohrungen für zwei Lichtleitfasern 24 versehen ist. Die beiden Aufnahmebohrungen erstrecken sich senkrecht zur Erstreckungsebene der Deckplatte 22. Die Deckplatte 22 ist mittels geeigneter Justier- und Positioniergestaltungen, beispielsweise pyramidenförmigen Vorsprüngen und komplementären Vertiefungen, präzise relativ zur Leiterplatte 16 ausgerichtet, so daß die beiden Lichtleitfasern 24 mit den zugehörigen opto-elektronischen Bauteilen präzise optisch gekoppelt sind.

Die elektrischen Leiterbahnen 18 sind in einem an die Außenfläche der Leiterplatte 16 angrenzenden Bereich als Nuten ausgebildet, deren Oberfläche metallisiert ist. In jede Nut ist jeweils ein Steckkontakt 26 eingesetzt, der als U-förmiger Bügel ausgebildet ist. Einer der Schenkel des Bügels ist mit der elektrischen Leiterbahn verbunden, entweder durch einfaches Aufstecken oder auch durch Verlöten, während der gegenüberliegende Schenkel in Aussparungen 28 aufgenommen ist, die in der Stirnseite des Innenteils 12 ausgebildet sind. Auf diese Weise liegt der Verbindungssteg zwischen den beiden Schenkeln als Kontaktfläche auf der Außenseite des Innenteils 12 frei, so daß sie von Kontakten der Steckbuchse kontaktiert werden kann. Die Ausgestaltung der Steckkontakte 26 und die spezielle Anordnung führt zu einem verbesserten mechanischen Halt der Leiterplatte 16 auf der Rückseite der Stirnseite des Innenteils 12.

Das Außenteil 10 ist auf seiner Rückseite mit einer Knickschutztülle 30 versehen, die ein scharfkantiges Abknicken der Lichtleitfasern beim Austritt aus dem Steckverbinder verhindert.

Als Alternative zur dargestellten Ausführungsform kann vorgesehen sein, daß in das Gehäuse ein 1x2-Faserverzweiger integriert ist, so daß ein bidirektionaler Datenverkehr über eine einzige Lichtleitfaser möglich ist. Der Faserverzweiger kann entweder als separates Bauteil im Gehäuse oder integriert in die Leiterplatte ausgeführt werden.

Gemäß einer alternativen Ausführungsform können anstelle der separaten, auf die Leiterplatte aufgesteckten Steckkontakte auch mehrere geeignet metallisierte Flächen der Leiterplatte verwendet werden, die unmittelbar kontaktiert werden.

## Patentansprüche

1. Optischer Transceiver mit einem Gehäuse (10, 12), einer in Abformtechnik hergestellten Leiterplatte (16), mindestens einer Lichtleitfaser (24), die mit der Leiterplatte gekoppelt ist, und mehreren elektrisch leitenden Kontaktelementen (26), die mit Leiterbahnen (18) der Leiterplatte elektrisch leitend verbunden sind.

2. Transceiver nach Anspruch 1, **dadurch gekennzeichnet, daß** eine Deckplatte (22) vorgesehen ist, die auf die Leiterplatte aufgesetzt ist und in der die Lichtleitfaser aufgenommen ist.

3. Transceiver nach Anspruch 2, **dadurch gekennzeichnet, daß** die Deckplatte zur Aufnahme der Lichtleitfaser (24) mit einer Aufnahmebohrung versehen ist, die sich senkrecht zur Erstreckungsebene der Deckplatte erstreckt.

4. Transceiver nach einem der vorhergehenden Ansprüche, **dadurch gekennzeichnet, daß** die Leiterplatte (16) mit opto-elektronischen Bauteilen bestückt ist.

5. Transceiver nach einem der vorhergehenden Ansprüche, **dadurch gekennzeichnet, daß** die Kontaktelemente separate Steckkontakte (26) sind.

6. Transceiver nach Anspruch 5, **dadurch gekennzeichnet, daß** die Steckkontakte (26) auf die Leiterbahnen aufgesteckt sind.

7. Transceiver nach Anspruch 6, **dadurch gekennzeichnet, daß** die Leiterplatte mehrere Nuten (18) aufweist, die mit einer Metallisierung versehen sind und in denen die Steckkontakte aufgenommen sind.

8. Transceiver nach einem der vorhergehenden Ansprüche, **dadurch gekennzeichnet, daß** das Gehäuse aus einem Außenteil (10) und einem Innenteil (12) besteht, wobei das Innenteil mit der Leiterplatte (16) verbunden ist und mit einem Schnapphaken (14) versehen ist, so daß der Transceiver in einem Gegenstück verriegelt werden kann.

9. Transceiver nach einem der vorhergehenden Ansprüche, **dadurch gekennzeichnet, daß** die Steckkontakte U-förmig ausgebildet und so angeordnet sind, daß die Leiterplatte und eine Stirnseite des Gehäuses zwischen ihren Schenkeln liegen und aneinander gehalten werden.

10. Transceiver nach einem der vorhergehenden Ansprüche, **dadurch gekennzeichnet, daß** er als Stecker ausgebildet ist.

11. Transceiver nach Anspruch 10, **dadurch gekennzeichnet, daß** er ein Stecker des Typs RJ-45 ist.

12. Transceiver nach einem der vorhergehenden Ansprüche, **dadurch gekennzeichnet, daß** zwei Lichtleitfasern (24) vorgesehen sind.

13. Transceiver nach einem der Ansprüche 1 bis 11, **dadurch gekennzeichnet, daß** ein 1x2-Faserverzweiger sowie eine einzig Lichtleitfaser für einen bidirektionalen Datenverkehr vorgesehen sind.
